Europäisches Patentamt

European Patent Office

Office européen des brevets

(19)

(11) **EP 1 328 418 B1**

(12) **EUROPÄISCHE PATENTSCHRIFT**

(45) Veröffentlichungstag und Bekanntmachung des Hinweises auf die Patenterteilung:
**09.02.2005  Patentblatt 2005/06**

(21) Anmeldenummer: 01974047.1

(22) Anmeldetag: **15.09.2001**

(51) Int Cl.$^7$: **B60N 2/00**

(86) Internationale Anmeldenummer:
**PCT/DE2001/003553**

(87) Internationale Veröffentlichungsnummer:
**WO 2002/032716 (25.04.2002 Gazette 2002/17)**

(54) **VERFAHREN ZUR BEWERTUNG EINES SITZPROFILS**

METHOD FOR EVALUATING A SEAT PROFILE

PROCEDE D'EVALUATION D'UN PROFIL DE SIEGE

(84) Benannte Vertragsstaaten:
**DE FR GB IT SE**

(30) Priorität: **17.10.2000  DE 10051312**

(43) Veröffentlichungstag der Anmeldung:
**23.07.2003  Patentblatt 2003/30**

(73) Patentinhaber: **ROBERT BOSCH GMBH**
**70442 Stuttgart (DE)**

(72) Erfinder:
  • **LICH, Thomas**
    **71409 Schwaikheim (DE)**
  • **MACK, Frank**
    **70376 Stuttgart (DE)**

(56) Entgegenhaltungen:
  **EP-A- 1 000 797          WO-A-98/14345**
  **WO-A-99/24285          US-A- 5 821 633**

  • **"DESCRIPTION OF PROPOSED SYSTEM" SAE TECHNICAL PAPER SERIES, SOCIETY OF AUTOMOTIVE ENGINEERS, WARRENDALE, PA, US, 1999, Seiten 1439-1443, XP008000559 ISSN: 0148-7191 in der Anmeldung erwähnt**

EP 1 328 418 B1

## Beschreibung

Stand der Technik

Die Erfindung geht aus von einem Verfahren zur Bewertung eines Sitzprofils nach der Gattung des unabhängigen Patentanspruchs.

In K. Billen, L. Federspiel, P. Schockmehl, B. Serban und W. Scherrel: Occupant Classification System for smart restrained systems, SAE Paper, 1999, Seite 33 bis Seite 38 wird eine Sitzmatte mit einer Sensormatrix beschrieben, wobei die Sensormatrix zur zeitkontinuierlichen Erstellung eines Sitzprofils von verschiedenen Personen und Gegenständen verwendet wird. Aus dem Sitzprofil werden Merkmale bestimmt, die zur Insassenklassifizierung verwendet werden.

Aus US-A-5,821,633 ist ein Sensorsystem bekannt, um einen Schwerpunkt auf einen Sitz durch die Belastung durch einen Passagier zu bestimmen. Dabei wird fuzzy logic verwendet.

Vorteile der Erfindung

Das erfindungsgemäße Verfahren zur Bewertung eines Sitzprofils mit den Merkmalen des unabhängigen Patentanspruchs hat demgegenüber den Vorteil, dass der Einfluß von dynamischen Vorgängen wie eine Kurvenfahrt, das Einsteigeverhalten an einer Steigung und rasche Bewegungen eines Objekts auf einem Fahrzeugsitz zur Bewertung eines Sitzprofils, das mit der Sensormatrix aufgenommen wird, herangezogen werden. Dies ist eine kostengünstige und ohne Hardwarezusatzaufwand verbundene Lösung, um bessere Aussagen über das Sitzprofil machen zu können und um damit bessere Reaktionen von Rückhaltesystemen oder anderen Systemen, denen diese Daten zur Verfügung gestellt werden, zu ermöglichen.

Weiterhin ist es dabei von Vorteil, dass statische Objekte wie ein Kindersitz durch die Auswertung des dynamischen Verhaltens und hier mit dem Dynamikfaktor erkannt werden. Darüber hinaus ist die Verwendung von zwei Parametern von Vorteil, um den Dynamikfaktor zu berechnen, womit die Zuverlässigkeit des berechneten Dynamikfaktors erhöht wird.

Durch die in den abhängigen Ansprüchen aufgeführten Maßnahmen und Weiterbildungen sind vorteilhafte Verbesserungen des im unabhängigen Patentanspruch angegebenen Verfahrens zur Bewertung eines Sitzprofils möglich.

Besonders vorteilhaft ist, dass die zeitkontinuierlichen Änderungen der Sensoren als die Änderungen des Sitzprofils verwendet werden. Dabei ist es insbesondere von Vorteil, wenn die Sensorwerte mit wenigstens einem Schwellwert verglichen werden, um Änderungen der Sensoren zu detektieren.

Darüber hinaus ist es von Vorteil, dass Schwerpunktsveränderungen durch eine Positionsveränderung des wenigstens einen Schwerpunkts überwacht werden. Der Schwerpunkt wird auf die übliche Weise, wie es aus der Physik bekannt ist, berechnet.

Weiterhin ist es von Vorteil, dass der Dynamikfaktor aus einer gewichteten Summe der Änderungen der Sensoren der Sensormatrix und der Positionsveränderungen des wenigstens einen Schwerpunkts bestimmt wird. Damit werden diese beiden Merkmale berücksichtigt, um eventuell den Einfluß eines Merkmals durch das andere Merkmal zu kompensieren. Die Gewichtungsfaktoren sind vorbekannt und aus experimentellen Studien entwickelt worden.

Darüber hinaus ist es von Vorteil, dass das erfindungsgemäße Verfahren eine Haltefunktion aufweist, um kurzfristige hohe Dynamikfaktoren erfaßbar zu machen, indem eine Abklingfunktion eingestellt wird.

Weiterhin ist es von Vorteil, dass eine Vorrichtung zur Durchführung des erfindungsgemäßen Verfahrens vorliegt, die eine Sensormatrix in einer Sitzmatte eines Fahrzeugsitzes, einen Analog-Digitalwandler zur Digitalisierung der Sensorwerte, einen Speicher zur Zwischenspeicherung von Daten und einen Prozessor zur Berechnung des Dynamikfaktors aufweist.

Zeichnung

Ausführungsbeispiele der Erfindung sind in der Zeichnung dargestellt und werden in der nachfolgenden Beschreibung näher erläutert. Es zeigt Figur 1 ein Blockschaltbild der Vorrichtung zur Durchführung des erfindungsgemäßen Verfahrens, Figur 2 ein Blockschaltbild eines Steuergeräts für eine Sensormatrix, Figur 3 die Bewertung der Schwerpunktsänderung, Figur 4 die Anwendungen der Haltefunktion und Figur 5 ein Flußdiagramm des erfindungsgemäßen Verfahrens.

Beschreibung

Die Verwendung einer Sensormatrix in einer Sitzmatte in einem Fahrzeugsitz ist ein Mittel, um eine Insassenklassifizierung vorzunehmen. Die Insassenklassifizierung erfolgt entweder anhand des Sitzprofils und/oder einer Gewichtsschätzung. Bei dem Sitzprofil sind sowohl die Sitzprofilgröße als auch Strukturen, die sich aus dem Sitzprofil ergeben, auswertbar. Zu diesen Strukturen gehört beispielsweise der Sitzbeinhöckerabstand, der einen Schluß auf das Gewicht des Insassen ziehen läßt.

Die Insassenklassifizierung ist notwendig, um Rückhaltesysteme wie einen mehrstufigen Airbag gezielt anzusteuern, so dass ein optimaler Schutz für den Insassen gewährt wird und Verletzungen durch das Rückhaltesystem minimiert werden. Ein mehrstufiger Airbag erlaubt, dass die Rückhaltekraft, mit der der Airbag aufgeblasen wird, in Stufen schaltbar ist. Dies ermöglicht, je nach Gewicht der Person den Airbag einzustellen. Dynamische Effekte wie schnelle Kurvenfahrten, Einsteigeverhalten an Bergen oder anderen Steigungen oder auch Gefällen sowie rasche Bewegungen einer Person auf dem Fahrzeugsitz führen bei einer zeitkontinuierlichen Erfassung des Sitzprofils zu kurzfristigen Änderungen des Sitzprofils, die nicht notwendigerweise für die Einstellung des Rückhaltesystems nützlich sind, da solche Sitzprofile isoliert einen falschen Eindruck von dem auf dem Fahrzeugsitz befindlichen Objekt geben. Das Sitzprofil wird üblicherweise mit einem Qualitätsparameter bewertet, um schlechte Sitzprofile zu verwerfen und um damit bessere Sitzprofile, die vorher gewonnen wurden, weiterhin zu verwenden. Der Qualitätsparameter wird dabei mit einem vorgegebenen Schwellwert verglichen, um zu entscheiden, ob das gegebene Sitzprofil verwendbar ist oder nicht.

Dieser Qualitätsparameter wird hier erfindungsgemäß mit einem Dynamikfaktor bewertet, um auch die dynamischen Vorgänge in die Bewertung des Sitzprofils eingehen zu lassen. Der Dynamikfaktor wird zum einen anhand des Sitzprofils und/oder wenigstens eines Schwerpunkts berechnet. Für das Sitzprofil werden hier zeitkontinuierlich Änderungen der Sensoren der Sensormatrix überwacht. Bei dem Schwerpunkt werden zeitkontinuierlich Positionsveränderungen des wenigstens einen Schwerpunkts überwacht. Durch die Bildung einer gewichteten Summe aus den Änderungen der Sensoren und den Positionsveränderungen des wenigstens einen Schwerpunkts wird der Dynamikfaktor bestimmt, wobei die Gewichtungsfaktoren vorher experimentell festgelegt wurden. Durch die Anwendung einer Haltefunktion werden kurzfristige, hohe Dynamikfaktoren erfaßbar.

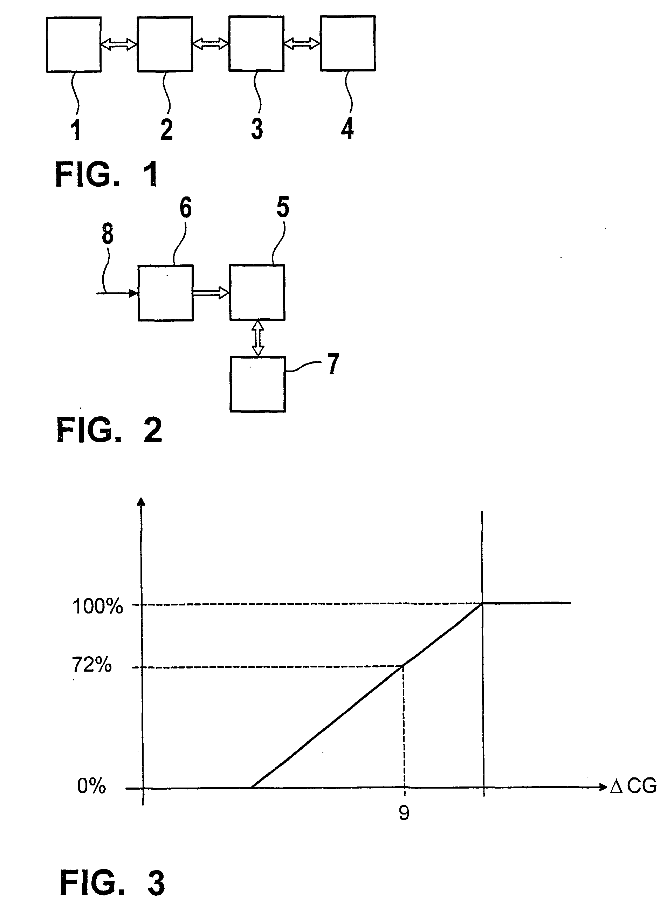

In Figur 1 ist als Blockschaltbild die erfindungsgemäße Vorrichtung dargestellt. Eine Sensormatrix 1 ist über einen Datenein-/ausgang mit einem Steuergerät 2 für die Sensormatrix 1 verbunden. Über einen zweiten Datenein-/ausgang ist das Steuergerät 2 für die Sensormatrix 1 mit einem Steuergerät 3 für ein Rückhaltesystem 4 verbunden. Über einen zweiten Datenein-/ausgang ist das Steuergerät 3 für das Rückhaltesystem 4 mit dem Rückhaltesystem 4 verbunden. Die Verbindungen können hier auch über Busleitungen realisiert sein und das Steuergerät 2 für die Sensormatrix 1 kann auch mit weiteren Steuergeräten und Fahrzeugsystemen verbunden sein, um seine Daten diesen Systemen verfügbar zu machen.

In der Sensormatrix 1 sind Drucksensoren in einer Matrix angeordnet. Bei zunehmenden Druck zeigen die Drucksensoren einen abnehmenden Widerstand. Die Sensormatrix 1 wird spalten- und zeilenweise bezüglich des Widerstandes vermessen, wobei damit dann eine Bestimmung der Widerstände der einzelnen Drucksensoren und der Druckbelastung möglich ist. Diese Messung erfolgt derart, dass Ströme gemessen werden. Die einzelnen Drucksensoren sind mit Spannungspotenzialen an den Spalten und Zeilen zunächst so beaufschlagt, so dass keine Ströme fließen. Durch Veränderung der Spannungspotenziale durch das Steuergerät 2 ist es nun möglich, dass Ströme durch einen jeweiligen Drucksensor fließen. Damit ist dann der Widerstandswert für den jeweiligen Drucksensor durch den Prozessor 5 bestimmbar. Die einzelnen Drucksensoren werden sequentiell durch die Veränderung der Spannungspotenziale an den Zeilen und Spalten abgefragt, so dass die Stromwerte nacheinander über eine Leitung zu dem Steuergerät 2 gelangen. Diese Stromwerte werden von dem Steuergerät 2 digitalisiert. Das Steuergerät berechnet damit zunächst die Widerstandswerte und erstellt damit das Sitzprofil der Sensormatrix 1. Mit den Widerstandswerten ist es nun möglich, den Schwerpunkt des Sitzprofils zu bestimmen, denn der Schwerpunkt ist dort angesiedelt, wo die niedrigsten Widerstandswerte zu messen sind, also der höchste Druck auf die Sensormatrix ausgeübt wurde. Den Schwerpunkt ermittelt das Steuergerät 2 durch eine Berechnung nach der bekannten Formel für den Schwerpunkt. Es liegt dann eine Position vor, die den Schwerpunkt angibt. Die Erfassung des Sitzprofils und der Positionsveränderungen des Schwerpunkts erfolgt zeitkontinuierlich.

In Figur 2 ist als Blockschaltbild das Steuergerät 2 dargestellt. Über einen Eingang 8 von der Sensormatrix 1 erhält ein Analog-Digitalwandler 6 die Meßwerte, also die Stromwerte, von den einzelnen Sensoren. Der Analog-Digitalwandler 6 digitalisiert diese Meßwerte, die dann als digitaler Datenstrom einem Prozessor 5 zugeführt werden. Der Prozessor 5 berechnet aus diesen Daten den Schwerpunkt und die Änderungen der einzelnen Sensoren. Durch einen Vergleich mit in einem Speicher 7, der über einen Datenein-/ausgang mit dem Prozessor 5 verbunden ist, enthaltenen Schwerpunktsdaten sind die Änderungen des Schwerpunkts als Funktion der Zeit erfaßbar. Die Positionen des Schwerpunkts werden also laufend abgespeichert. Diese Änderung des Schwerpunkts wird in einen Prozentsatz umgesetzt, indem die Positionsveränderung in Millimetern einem Prozentsatz zugeordnet wird. Dabei wird die Summe der Beträge aus den Veränderungen in x - und y-Richtung verwendet. Es ist jedoch auch möglich, dass die tatsächliche Positionsveränderung durch Bildung der Quadratwurzel aus der Summe der Quadrate der Veränderungen in x- und y-Richtung berechnet wird.

In Figur 3 ist ein Diagramm, das auf der Abszisse die Schwerpunktsänderungen ∆CG und auf der Ordinate eine prozentuale Schwerpunktsänderung aufweist. Über eine Rampe sind die absoluten Schwerpunktsänderungen auf der Abszisse mit den prozentualen Schwerpunktsänderungen auf der Ordinate in Beziehung gesetzt. Hier wurde eine Schwerpunktsänderung von 9 zwischen dem aktuellen Schwerpunkt und dem vorhergehenden Schwerpunkt festgestellt. Dies wurde in eine Schwerpunktsänderung von 72% übersetzt. Der Wert von 72 geht dann in die Summenbildung für den Dynamikfaktor ein, wobei dieser Wert 72 dann mit einem Gewichtungsfaktor, der im Speicher 7 abgelegt ist, gewichtet wird.

Der Prozessor 5 berechnet aus den Änderungen der Sensorenmeßwerte den zweiten Anteil für den Dynamikfaktor. Dabei wird hier der Meßwert von den einzelnen Sensoren mit einem vorgegebenen Schwellenwert, der im Speicher 7 abgelegt ist, verglichen, um festzustellen, ob nun der Sensor sich geändert hat oder nicht. Es können hier alternativ auch die absoluten Sensormeßwerte jeweils verglichen werden, um dann diese Änderungen zu bewerten. Die Änderungen werden dann aufsummiert und gehen als zweiter Summand in die Berechnung des Dynamikfaktors ein.

Die folgende Gleichung zeigt, wie hier beispielhaft der Dynamikfaktor berechnet wird.

$$Dynamikfaktor = \frac{DynCG \cdot A + DynProfil \cdot B}{A+B}$$

Dabei bedeutet DynCG den Wert, der sich aus der Schwerpunktsänderung ergeben hat, A den Gewichtungsfaktor für die Schwerpunktsänderung, DynProfil bedeutet den Wert, der sich aus der Änderung der Sensoren ergeben hat und B den Gewichtungsfaktor für die Änderung der Sensoren.

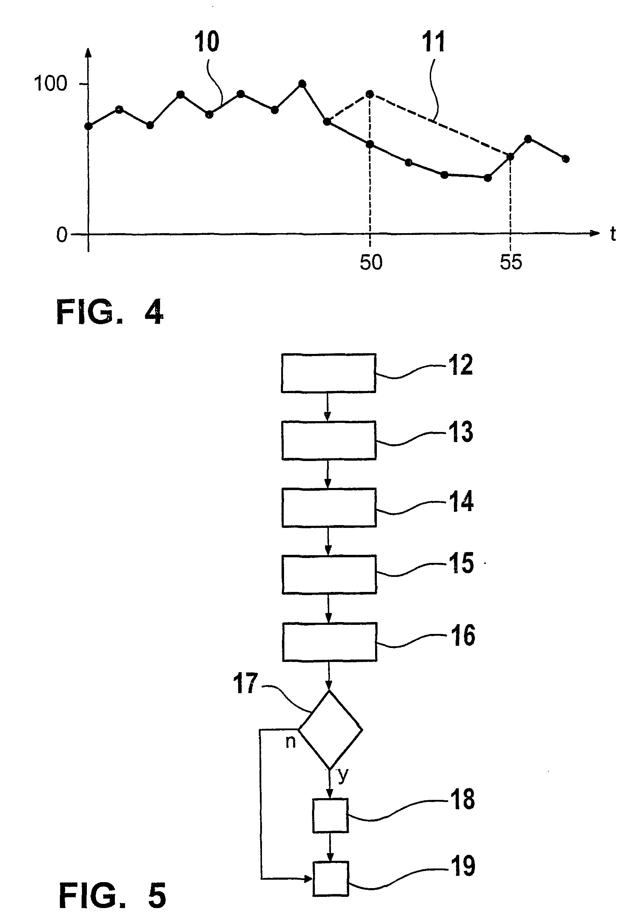

In Figur 4 ist die Anwendung der Haltefunktion auf die Berechnung des Dynamikfaktors in Abhängigkeit von der Zeit dargestellt. Eine Funktion 10 im Dynamikfaktor-Zeit-Diagramm gibt zu aufeinanderfolgenden Zeitpunkten die ermittelten Dynamikfaktoren wieder. Zum Zeitpunkt 50 wird durch die gestrichelte Linie ein alternativer Verlauf der Dynamikfaktorfunktion dargestellt. Hier ist der zum Zeitpunkt 50 ermittelte Dynamikfaktor höher als der vorangegangene Wert. In diesem Fall klingt nun die Funktion 11 ausgehend von dem Dynamikfaktor bei dem Zeitpunkt 50 so lange mit einer Haltefunktion 11 ab, bis die Haltefunktion 11 sich wieder mit den ermittelten Dynamikfaktoren schneidet, was bei dem Zeitpunkt 55 erreicht wird. Damit werden steile Sprünge bei den Dynamikfaktoren in Abhängigkeit von der Zeit vermieden.

Die Haltefunktion hat die Aufgabe, einen errechneten Dynamikfaktor in eine zeitliche Beziehung zur vorangegangenen Dynamik zu setzen. Dabei wird der Dynamikfaktor zum Zeitpunkt t mit dem Dynamikfaktor zum Zeitpunkt t-1 verglichen. Hat sich die Dynamik erhöht, wird der aktuelle Wert als Basis für eine Abklingfunktion verwendet. Die Abklingfunktion kann folgendermaßen realisiert werden:

$$Dynamikfaktor(t) = Dynamikfaktor(t\text{-}1) - \frac{Dynamikfaktor(t\text{-}1) \cdot Z\ddot{a}hler}{C}$$

Die im Speicher abgespeicherte Variable C gibt den Wert an, wie stark das Abklingverhalten andauert. Der Zähler gibt an, wie oft der aktuelle Dynamikfaktor kleiner ist als der für die Abklinkfunktion verwendete Basiswert.

In Figur 5 ist das erfindungsgemäße Verfahren als Flußdiagramm dargestellt. In Verfahrensschritt 12 werden mit den Sensoren der Sensormatrix 1 die Meßwerte erfaßt, mit dem Analog-Digitalwandler 6 digitalisiert und von dem Prozessor 5 empfangen. In Verfahrensschritt 13 führt dann der Prozessor 5 zunächst die Schwerpunktsberechnung durch und in Verfahrensschritt 14 bestimmt der Prozessor 5 die Schwerpunktsänderungen, um dann, wie in Figur 3 dargestellt, diese Schwerpunktsänderungen mit einem Prozentsatz zu bewerten. In Verfahrensschritt 15 werden dann die Änderungen der Sensoren entweder mittels eines Schwellwerts oder die absoluten Meßwertänderungen bestimmt. Auch hierfür wird eine Bewertung der Änderungen durchgeführt. In Verfahrensschritt 16 wird dann der Dynamikfaktor aus der gewichteten Summe der Schwerpunktsänderungen und der Sitzprofiländerungen bestimmt. In Verfahrensschritt 17 wird bestimmt, ob die Haltefunktion auf den Dynamikfaktor angewendet werden soll. Wenn ja, wird Verfahrensschritt 18, wie oben dargestellt, durchgeführt, wenn nicht, wird sofort mit Verfahrensschritt 19 fortgefahren, indem der Qualitätsparameter, mit dem das Sitzprofil bewertet wird, nun zunächst durch den Dynamikfaktor gewichtet wird. Das erfindungsgemäße Verfahren läuft zeitkontinuierlich ab.

Die Abfolge der Schwerpunktsberechnung und der Änderung der Sensorenwerte kann auch vertauscht werden. Weiterhin ist es möglich, dass entweder nur die Schwerpunktsänderung oder nur die Änderung der Sensoren verwendet wird.

# EP 1 328 418 B1

**Patentansprüche**

1. Verfahren zur Bewertung eines Sitzprofils, wobei das Sitzprofil mit einer Sensormatrix (1) in einer Sitzmatte in einem Fahrzeugsitz ermittelt wird, wobei das Sitzprofil mit einem Qualitätsparameter bewertet wird, wobei anhand von Änderungen des Sitzprofils und/oder wenigstens eines Schwerpunkts, der für das Sitzprofil bestimmt wird, ein Dynamikfaktor bestimmt wird und wobei mit dem Dynamikfaktor der Qualitätsparameter bewertet wird, **dadurch gekennzeichnet, dass** auf den Dynamikfaktor eine Haltefunktion mittels einer Abklingfunktion angewendet wird.

2. Verfahren nach Anspruch 1, **dadurch gekennzeichnet, dass** für das Sitzprofil zeitkontinuierlich Änderungen von Sensoren der Sensormatrix (1) für die Bestimmung des Dynamikfaktors überwacht werden.

3. Verfahren nach Anspruch 1 oder 2, **dadurch gekennzeichnet, dass** für die Bestimmung des Dynamikfaktors zeitkontinuierlich Positionsveränderungen des wenigstens einen Schwerpunkts überwacht werden.

4. Verfahren nach Anspruch 2 oder 3, **dadurch gekennzeichnet, dass** der Dynamikfaktor aus einer gewichteten Summe der Änderungen der Sensoren der Sensormatrix (1) und der Positionsveränderungen des wenigstens einen Schwerpunkts bestimmt wird.

**Claims**

1. Method for evaluating a seat profile, the seat profile being determined with a sensor matrix (1) in a seat mat in a vehicle seat, the seat profile being evaluated with a quality parameter, a dynamic factor being determined with reference to changes in the seat profile and/or at least one centre of gravity which is determined for the seat profile, and the quality parameter being evaluated with the dynamic factor, **characterized in that** a hold function is applied to the dynamic factor by means of a decay function.

2. Method according to Claim 1, **characterized in that** changes of sensors of the sensor matrix (1) are monitored continuously for the seat profile in order to determine the dynamic factor.

3. Method according to Claim 1 or 2, **characterized in that** changes in position of the at least one centre of gravity are monitored continuously in order to determine the dynamic factor.

4. Method according to Claim 2 or 3, **characterized in that** the dynamic factor is determined from a weighted sum of the changes of the sensors of the sensor matrix (1) and the changes in position of the at least one centre of gravity.

**Revendications**

1. Procédé d'évaluation d'un profil de siège selon lequel on détermine le profil de siège à l'aide d'une matrice de capteur (1) dans une nappe faisant partie d'un siège de véhicule,
   on évalue le profil de siège avec un paramètre de qualité, et
   à partir des variations du profil de siège et/ou d'au moins un centre de gravité défini pour le profil de siège on détermine un coefficient dynamique, et
   on exploite le paramètre de qualité avec le coefficient dynamique,
   **caractérisé en ce qu'**
   on applique une fonction de maintien ou coefficient dynamique à l'aide d'une fonction d'atténuation.

2. Procédé selon la revendication 1,
   **caractérisé en ce que**
   pour le profil de siège on surveille les variations continues des capteurs de la matrice de capteur (1) pour déterminer le coefficient dynamique.

3. Procédé selon l'une quelconque des revendications 1 ou 2,
   **caractérisé en ce qu'**
   on surveille de manière continue dans le temps les variations de position d'au moins un centre de gravité pour déterminer le coefficient dynamique.

4. Procédé selon l'une quelconque des revendications 1 ou 2,
   **caractérisé en ce qu'**
   à partir d'une somme pondérée des variations des capteurs de la matrice de capteur (1) et des variations de position d'au moins un centre de gravité, on détermine le coefficient dynamique.

FIG. 1

FIG. 2

FIG. 3

**FIG. 4**

**FIG. 5**